# EUROPEAN PATENT APPLICATION

(11) **EP 3 095 593 A1**
(43) Date of publication of application: **23.11.2016**
(21) Application number: 16167175.5
(22) Date of filing: 26.04.2016
(51) Int. Cl.: B29C 67/00, B29B 11/16, B29C 70/38

(54) **3D PRINTED CARBON FIBER PREFORMS**

(30) Priority: 13.05.2015 US 201514711508
(71) Applicant: Honeywell International Inc., Morris Plains, NJ 07950 (US)
(72) Inventor: FRYSKA, Slawomir T., Morris Plains, NJ 07950 (US); LA FOREST, Mark, Morris Plains, NJ 07950 (US)
(74) Representative: Houghton, Mark Phillip

(57) **Abstract**

In some examples, a method for forming a carbon fiber preform comprises depositing, via a print head of a three-dimensional printing system, a first plurality of coated carbon fibers on a substrate to form a first layer on the substrate, wherein each carbon fiber of the first plurality of coated carbon fibers comprises a carbon fiber coated with a resin; and depositing, via the print head of the three-dimensional printing system, a second plurality of coated carbon fibers on the first layer to form a second layer on the first layer, wherein each carbon fiber of the second plurality of coated carbon fibers comprises the carbon fiber coated with the resin, and wherein the carbon fiber preform includes the first layer of the first plurality of coated carbon fibers and the second layer of the second plurality of coated carbon fibers.

## Description

### TECHNICAL FIELD

The disclosure relates to carbon fiber preforms, e.g., as used to form carbon-carbon composite materials.

### BACKGROUND

Carbon fiber-reinforced carbon materials, also referred to as carbon-carbon (C-C) composite materials, are composite materials that include carbon fibers reinforced in a matrix of carbon material. The C-C composite materials can be used in many high temperature applications. For example, the aerospace industry employs C-C composite materials as friction materials for commercial and military aircraft, such as brake friction materials.

### SUMMARY

Devices, systems, and techniques for forming a carbon fiber preform are described. Example a carbon fiber preforms and carbon-carbon composite components resulting from the techniques are also described. In some examples, carbon fiber preforms may include a plurality of individual layers, each layer comprising a resin material and carbon fibers. The individual layers may be formed on a layer by layer basis by depositing the resin material and carbon fibers using a three-dimensional printing system. In total, the individual layers may form a carbon fiber preform having a desired geometry. For example, the individual layers may be stacked to define the carbon fiber preform.

In some examples, a carbon fiber preform may include a plurality of layers formed of a composite material including a plurality of carbon fibers in a resin matrix material (e.g., pitch). The multi-layer carbon fiber preform may be formed via an additive manufacturing process (e.g., three-dimensional printing) in which individually layers are sequentially formed on a layer-by-layer basis in three-dimensions to generate a preform with a desired geometry. For example, individual layers may be formed by depositing the melted composite material via a print head of a three-dimensional printing system. The melted composite material solidifies to form a respective layer of composite material. Additional melted composite material can be deposited on the formed layer to form an additional layer of composite material. The process may be repeated and the three-dimensional position of the print head in may be under automated control during the process such that the location at which the melted composite material is deposited can be controlled to define a multilayer carbon fiber preform having a desired three-dimensional shape. The carbon fiber preform may then the carbonized and densified to generate a densified carbon-carbon composite material, such as, e.g., a carbon brake disc.

In other examples, a carbon fiber preform may include a plurality of layers each formed by depositing a plurality of carbon fiber each coated with a resin. The multi-layer carbon fiber preform may be formed via an additive manufacturing process (e.g., three-dimensional printing) in which material is sequentially deposited in all three-dimensions, e.g., on a layer by layer basis, to generate an overall preform with a desired shape and geometry in three-dimensions defined by the combination of the deposited material. For example, individual layers may be formed by depositing a plurality of individual carbon fibers each coated with the resin, followed by the deposition of additional individual carbon fibers each coated with the resin on the respective layer to form an additional layer of composite material. The process may be repeated and the three-dimensional position of the print head in may be under automated control during the process such that a multilayer carbon fiber preform having a desired three-dimensional shape is produced. The carbon fiber preform may then the carbonized and densified to generate a densified carbon-carbon composite material, such as, e.g., a carbon brake disc.

In one aspect, the disclosure is directed to a method for forming a carbon fiber preform. The method comprises depositing a composite material on a substrate to form a first layer of the composite material, wherein the composite material comprises a plurality of carbon fibers in mixed a resin matrix material; and depositing the composite material on the first layer to form a second layer on the first layer, wherein the carbon fiber preform includes the first layer of the composite material and the second layer of composite material, and includes the plurality of carbon fibers and the resin matrix material.

In another aspect, the disclosure is directed to a carbon fiber preform comprising a plurality of layers each formed by deposition of a composite material to define the respective layer, wherein the composite material comprises a plurality of carbon fibers mixed in a resin matrix material, wherein the plurality of layers comprise a first layer of the composite material and a second layer of the composite material on the first layer.

In another aspect, the disclosure is directed to a densified carbon-carbon composite material comprising a densified carbon fiber preform, wherein the carbon fiber preform comprises a plurality of layers each formed by deposition of a composite material to define the respective layer, wherein the composite material comprises a plurality of carbon fibers mixed in a resin matrix material, wherein the plurality of layers comprise a first layer of the composite material and a second layer of the composite material on the first layer.

In another aspect, the disclosure is directed to a method for forming a carbon fiber preform, the method comprising depositing, via a print head of a three-dimensional printing system, a first plurality of coated carbon fibers on a substrate to form a first layer on the substrate, wherein each carbon fiber of the first plurality of coated carbon fibers comprises a carbon fiber coated with a resin; and depositing, via the print head of the three-dimensional printing system, a second plurality of coated carbon fibers on the first layer to form a second layer on the first layer, wherein each carbon fiber of the second plurality of coated carbon fibers comprises the carbon fiber coated with the resin, and wherein the carbon fiber preform includes the first layer of coated carbon fibers and the second layer of coated carbon fibers.

In another aspect, the disclosure is directed to a carbon fiber preform comprising a plurality of stacked layers, the plurality of stacked layers including a first layer formed by depositing, via a print head of a three-dimensional printing system, a first plurality of coated carbon fibers, and a second layer formed by depositing, via the print head of the three-dimensional printing system, a second plurality of coated carbon fibers on the first layer to form the second layer on the first layer, wherein each carbon fiber of the first plurality and the second plurality of coated carbon fibers comprises a carbon fiber coated with a resin.

In another aspect, the disclosure is directed to a densified carbon-carbon composite material comprising a densified carbon fiber preform, wherein the carbon fiber preform comprises a plurality of stacked layers, the plurality of layers including a first layer formed by depositing, via a print head of a three-dimensional printing system, a first plurality of coated carbon fibers, and a second layer formed by depositing, via the print head of the three-dimensional printing system, a second plurality of coated carbon fibers on the first layer to form the second layer on the first layer, wherein each carbon fiber of the first plurality and the second plurality of coated carbon fibers comprises a carbon fiber coated with a resin.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a schematic block diagram illustrating an example aircraft brake assembly.
FIGS. 2-4 are conceptual diagrams illustrating an example carbon fiber preform in accordance with aspects of the disclosure.
FIG. 5 is a schematic diagram illustrating an example three-dimensional printing system which may be used to manufacture the example preform of FIGS. 2-4.
FIG. 6 is a flow diagram illustrating an example method of forming an example carbon fiber preform and a densified carbon-carbon composite material from the carbon fiber preform.
FIG. 7 is a schematic diagram illustrating another example three-dimensional printing system which may be used to manufacture the example preform of FIGS. 2-4.
FIG. 8 is a schematic diagram illustrating an example pultrusion module that may be used in the three-dimensional printing system of FIG. 7.
FIG. 9 is a flow diagram illustrating another example method of forming a carbon fiber preform and a densified carbon-carbon composite material from the preform.

### DETAILED DESCRIPTION

Example techniques for forming a carbon fiber preform are described herein, along with carbon-carbon composite materials and structures formed from the carbon fiber preform. Densified C-C composite materials used, for example, in aerospace applications such as brake discs, may be formed from carbon fiber preforms that have been densified using a variety of densification techniques. For example, a carbon fiber preform may be formed by layering fabric sheets formed of woven or nonwoven carbon fiber, which may be then be densified by infiltrating the preform with liquid pitch using vacuum pressure infiltration (VPI) and/or resin transfer molding (RTM) followed by carbonization of the pitch to achieve a C-C composite material exhibiting a desired final density. Additionally or alternatively, chemical vapor infiltration (CVI) or chemical vapor deposition (CVD) may be used to densify the fabric preform or another carbon preform. In the case of an aircraft brake pad, in some examples, the carbonized preform may take the form of an annular ring, although other shapes may also be used.

In accordance with one or more examples of the disclosure, a carbon fiber preform may include a plurality of layers formed of carbon fibers and resin. In one example, the plurality of layers may be formed by sequentially depositing a composite material including a plurality of carbon fibers in a resin matrix material via an additive manufacturing process. For example, a carbon fiber preform may include a plurality of layers, where each layer is formed by depositing the composite material via a print head of a three-dimensional printing system onto a substrate or a previously formed layer. During the process, the position of the print head may be controlled in a three-dimensional space such that the layers are sequentially formed in three-dimensions to define a carbon fiber preform with a desired geometry.

In some examples, individual layers may be formed by depositing the composite material in a melted state (a melted composite material) via a print head, which then solidifies to form a respective layer, followed by the deposition of additional melted composite material on the respective layer to form an additional layer. The process may be repeated and the three-dimensional position of the printed head in may be under automated control by a controller of the three-dimensional printing system during the process such that a multilayer carbon fiber preform having a desired three-dimensional geometry is produced. The carbon fiber preform may then be carbonized and densified to generate a densified carbon-carbon composite material, such as, e.g., a carbon brake disc.

In other examples, rather depositing a composite material including carbon fibers mixed in a resin material, individual layers of a carbon fiber preform may be formed by depositing, via a print head of a three-dimensional printing system, a plurality of individual carbon fibers each coated with a resin. In some examples, the three-dimensional printing system may employ a pultrusion process to coat a substantially continuous (e.g., continuous) carbon fiber filament with the resin and then cut the coated filament into individual carbon fibers coated with the resin. In some examples, the substantially continuous (e.g., continuous) carbon fiber may be a single filament or tow of carbon fibers. The individual coated carbon fibers may then be deposited via the print head of a three-dimensional printing system. Again, the process may be repeated and the three-dimensional position of the printed head in may be under automated control during the process such that a multilayer carbon fiber preform having a desired three-dimensional geometry is produced. The carbon fiber preform may then be carbonized and densified to generate a densified carbon-carbon composite material, such as, e.g., a carbon brake disc.

Examples of the disclosure may allow for one or more advantages. For example, by utilizing a three-dimensional printing process to form a carbon fiber preform by depositing carbon fibers and resin material, a carbon fiber preform may be fabricated with improved control (e.g., uniformity) of properties, such as, e.g., composition, across the volume of the preform compared to other existing techniques such as, e.g., the layering of fabric segments followed by resin densification of the layered fabric segments. As another example, a three-dimensional printing process may allow for improved control over the orientation of the carbon fibers in the preform such that the densification of the preform is improved and with the use of resins, such as, e.g., pitch, a densified final fiber matrix may be achieved which may improve cycle time for oxidative stabilization.

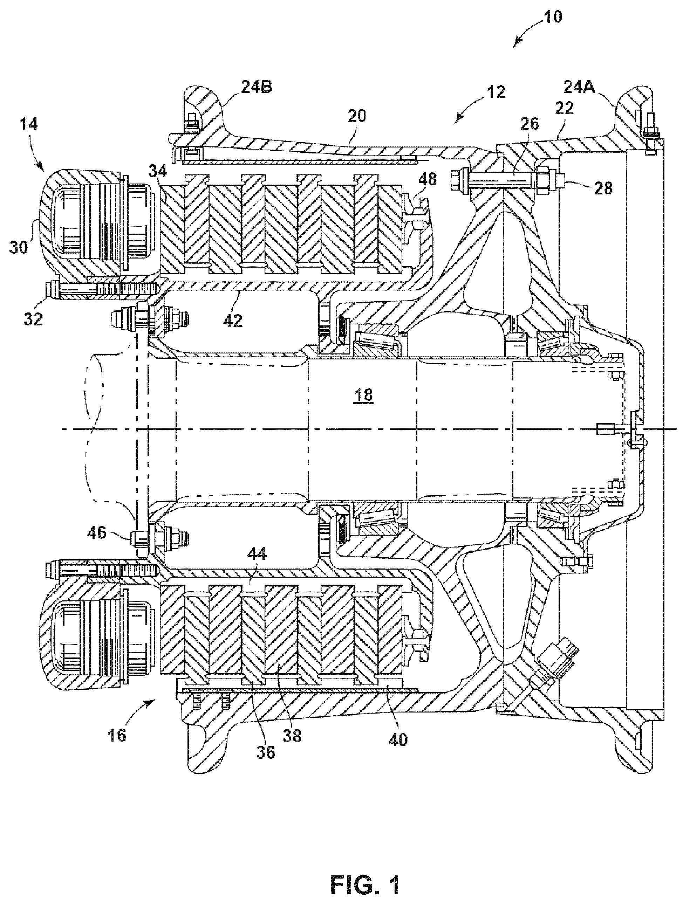

FIG. 1 is a conceptual diagram illustrating an example assembly 10 that may include one or more C-C composite material components formed in accordance with the techniques of this disclosure. For ease of description, examples of the disclosure will be described primarily with regard to aircraft brake discs formed of C-C composite materials. However, the C-C composite materials and carbon fiber preforms of this disclosure may be used to form parts other than aircraft brake discs. For example, the C-C composite material may be used a friction material in other types of braking applications, as well as in other applications such as, e.g., heat exchangers and heat shields.

In the example of FIG. 1, aircraft brake assembly 10 includes wheel 12, actuator assembly 14, brake stack 16, and axle 18. Wheel 12 includes wheel hub 20, wheel outrigger flange 22, bead seats 24A and 24B, lug bolt 26, and lug nut 28. Actuator assembly 14 includes actuator housing 30, actuator housing bolt 32, and ram 34. Brake stack 16 includes alternating rotor discs 36 and stator discs 38; rotor discs 36 are configured to move relative to stator discs 38. Rotor discs 36 are mounted to wheel 12, and in particular wheel hub 20, by beam keys 40. Stator discs 38 are mounted to axle 18, and in particular torque tube 42, by splines 44. Wheel assembly 10 may support any variety of private, commercial, or military aircraft.

Wheel assembly 10 includes wheel 18, which in the example of FIG. 1 is defined by a wheel hub 20 and a wheel outrigger flange 22. Wheel outrigger flange 22 is mechanically affixed to wheel hub 20 by lug bolts 26 and lug nuts 28. Wheel 12 defines bead seals 24A and 24B. During assembly, an inflatable tire (not shown) may be placed over wheel hub 20 and secured on an opposite side by wheel outrigger flange 22. Thereafter, lug nuts 28 can be tightened on lug bolts 26, and the inflatable tire can be inflated with bead seals 24A and 24B providing a hermetic seal for the inflatable tire.

Wheel assembly 10 may be mounted to an aircraft via torque tube 42 and axle 18. In the example of FIG. 1, torque tube 42 is affixed to axle 18 by a plurality of bolts 46. Torque tube 42 supports actuator assembly 14 and stators 38. Axle 18 may be mounted on a strut of a landing gear (not shown) to connect wheel assembly 10 to an aircraft.

During operation of the aircraft, braking may be necessary from time to time, such as during landing and taxiing. Wheel assembly 10 is configured to provide a braking function to an aircraft via actuator assembly 14 and brake stack 16. Actuator assembly 14 includes actuator housing 30 and ram 34. Actuator assembly 14 may include different types of actuators such as one or more of, e.g., an electrical-mechanical actuator, a hydraulic actuator, a pneumatic actuator, or the like. During operation, ram 34 may extend away from actuator housing 30 to axially compress brake stack 16 against compression point 48 for braking.

Brake stack 16 includes alternating rotor discs 36 and stator discs 38. Rotor discs 36 are mounted to wheel hub 20 for common rotation by beam keys 40. Stator discs 38 are mounted to torque tube 42 by splines 44. In the example of FIG. 1, brake stack 16 includes four rotors and five stators. However, a different number of rotors and/or stators may be included in brake stack 16 in other examples. Further, the relative positions of the rotors and stators may be reverse, e.g., such that rotor discs 36 are mounted to torque tube 42 and stator discs 38 are mounted to wheel hub 20.

Rotor discs 36 and stator discs 38 may provide opposing friction surfaces for braking an aircraft. As kinetic energy of a moving aircraft is transferred into thermal energy in brake stack 16, temperatures may rapidly increase in brake stack 16, e.g., beyond 200 degrees Celsius. With some aircraft, emergency braking (e.g., rejected takeoff) may result in temperatures in excess of 500 degrees Celsius, and in some cases, even beyond 800 degrees Celsius. As such, rotor discs 36 and stator discs 38 that form brake stack 16 may include robust, thermally stable materials capable of operating at such temperatures.

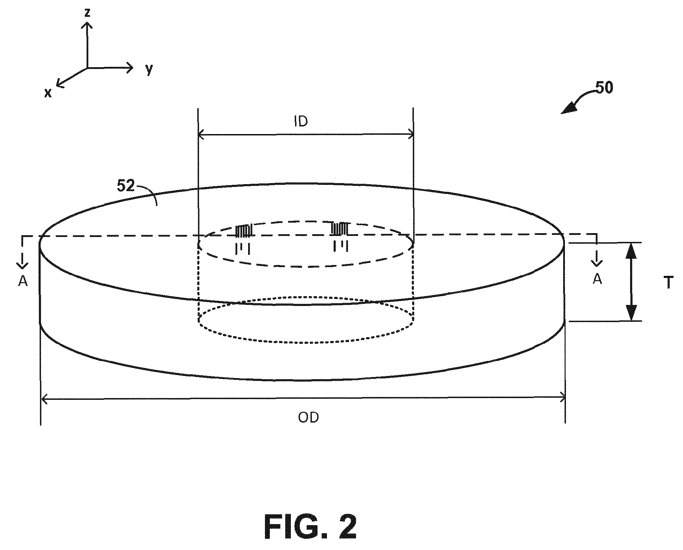

In one example, rotor discs 36 and/or stator discs 38 are formed of a C-C composite material fabricated according to one or more example techniques of this disclosure (e.g., the technique described with respect to FIG. 2). In particular, at least one of rotor discs 36 and/or at least one of stator discs 38 may be formed from densified C-C material fabricated from a carbon fiber preform generated via one or more of the example techniques of this disclosure. Rotor discs 36 and stator discs 38 may be formed of the same materials or different materials. For example, wheel assembly 10 may include metal rotor discs 36 and C-C composite stator discs 38, or vice versa. Further, each disc of the rotor discs 36 and/or each disc of the stator discs 38 may be formed of the same materials or at least one disc of rotor discs 36 and/or stator discs 38 may be formed of a different material than at least one other disc of the rotor discs 36 and/or stator discs 38.

As briefly noted, in some examples, rotor discs 36 and stator discs 38 may be mounted in wheel assembly 10 by beam keys 40 and splines 44, respectively. In some examples, beam keys 40 may be circumferentially spaced about an inner portion of wheel hub 20. Beam keys 40 may, for example, be shaped with opposing ends (e.g., opposite sides of a rectangular) and may have one end mechanically affixed to an inner portion of wheel hub 20 and an opposite end mechanically affixed to an outer portion of wheel hub 20. Beam keys 40 may be integrally formed with wheel hub 20 or may be separate from and mechanically affixed to wheel hub 20, e.g., to provide a thermal barrier between rotor discs 36 and wheel hub 20. Toward that end, in different examples, wheel assembly 10 may include a heat shield (not shown) that extends out radially and outwardly surrounds brake stack 16, e.g., to limit thermal transfer between brake stack 16 and wheel 12.

In some examples, splines 44 may be circumferentially spaced about an outer portion of torque tube 42. Splines 44 may, for example, be integrally formed with torque tube 42 or may be separate from and mechanically affixed to torque tube 42. In some examples, splines 44 may define lateral grooves in torque tube 42. As such, stator discs 38 may include a plurality of radially inwardly disposed notches configured to be inserted into a spline.

Because beam keys 40 and splines 44 may be in thermal contact with rotor discs 36 and stator discs 38, respectively, beam keys 40 and/or splines 44 may be made of thermally stable materials including, e.g., those materials discussed above with respect to rotor discs 36 and stator discs 38. Accordingly, in some examples, example techniques of the disclosure may be used to form a beam key and/or spline for wheel assembly 10.

The example assembly 10 shown in FIG. 1 is merely one example. In other examples, assembly 10 and the components of assembly 10 (e.g., wheel 10, actuator assembly 14, brake stack 16, and axle 18) may have another suitable configuration. In addition, in other examples, the C-C composite materials described herein resulting from example carbon fiber preforms may be used to form other structures in addition to, or instead of, one or more of discs 36, 38, keys 40, and spline 44.

FIG. 2 is a conceptual diagram illustrating example carbon fiber preform 50 in accordance with aspects of the disclosure. As shown, preform 50 is an annular ring with an inner diameter (ID), outer diameter (OD), and a thickness (T) in the z-axis direction (orthogonal x-y-z axes are shown in FIG. 2 for ease of description). Carbon fiber preform 50 is formed of composite material 52, and includes a plurality of individual layers (not shown in FIG. 2) formed by depositing composite material 52 including carbon fibers mixed in a resin matrix material, carbon fibers coated with a resin matrix material (also referred to herein as a resin), or both. For ease of illustration, the composite material will be described primarily as carbon fibers in a resin matrix material.

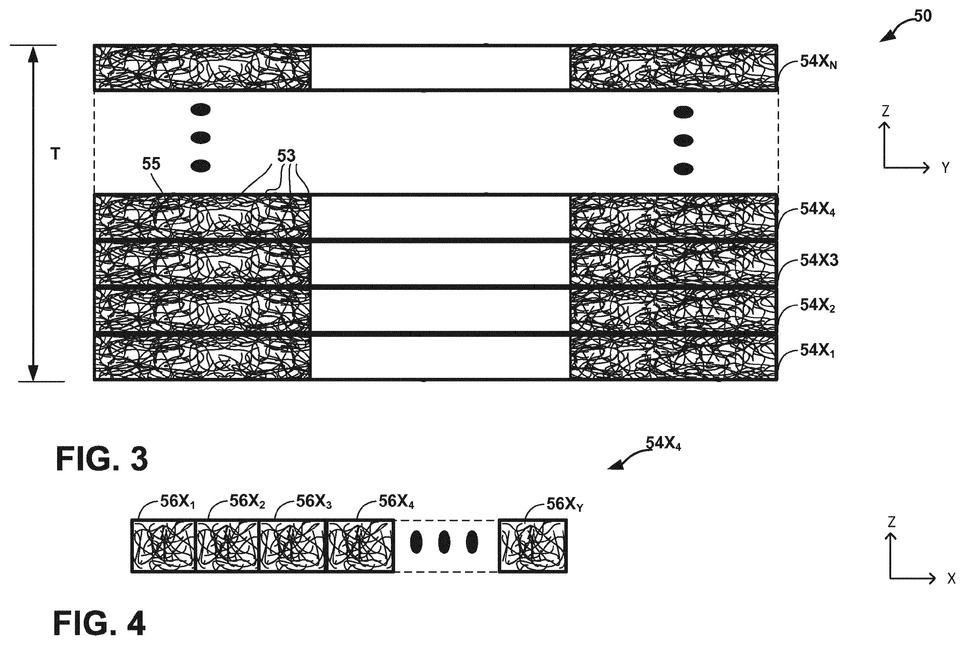

FIG. 3 is a schematic diagram illustrating preform 50 taking along cross-section A-A indicated in FIG. 2. As shown, preform 50 includes a plurality of individual layer 54X₁, 54X₂, 54X₃, 54X₄, ... and 54Xₙ, where n is the total number of individual layers in the z-axis direction. The layers will be collectively referred to as layers 54. In total, these individual layers define the thickness, T, of preform 50 in the z-axis direction. Each individual layer is formed of plurality of carbon fibers 53 in resin matrix material 55. The thickness of the individual layers 54 may be dependent on the design intent of the composite material for a given application. In some examples, the thickness of the individual layers may be between approximately 25 mils (approximately 0.635 millimeters (mm)) and approximately 125 mils (approximately 3.175 mm), although other thicknesses are contemplated. In some examples, the overall thickness, T, of preform 50 may be between approximately 0.5 inches (approximately 1.27 centimeters (cm)) to approximately 2.5 inches (approximately 6.35 cm), although other thicknesses are contemplated.

FIG. 4 is a schematic diagram illustrating a cross-section of layer 54X₄ of preform 50 in the x-direction, which is representative of the configuration of each of the respective individual layers 54 of preform 50. As shown, layer 54X₄ includes a plurality of individual rows 56X₁, 56X₂, 56X₃, 56X₄, ... and 56X_{y} aligned side-by-side in the x-axis direction, where y is the total number of individual rows in the x-axis direction. Again, each individual row 56 is formed plurality of carbon fibers 53 in resin matrix material 55 deposited by a print head of a three-dimensional printing system. Rows 56 combine to form layer 54X₄ in the x-y plane that also includes thickness in the z-axis direction.

Rows 56 may be deposited in any suitable configuration to form layer 54X₄ in the x-y plane. For example, rows 56 may be linear rows formed in a grid pattern, concentric circles e.g., from the ID to the OD of preform 50, or in a coiled pattern, e.g., from the ID to the OD of preform 50, which may allow for the continuous deposition of composite material 52 compared to a pattern of concentric circles. The individual rows 56 may have any suitable width and cross-sectional shape, both of which may depend on the design of the 3D print head and may be selected based on the design intent of the composite material formed from the preform. In some examples, the individual rows may have a substantially circular, oval, rectangular, triangular or other suitably shaped cross-section and may have a width of approximately 5/16 of an inch (approximately 7.9375 millimeters (mm)) to approximately 1/8 of an inch (approximately 3.175 mm).

As described, composite material 52 may include plurality of carbon fibers 53 mixed in resin matrix material 55. Any suitable carbon fiber may be used, such as, e.g., polyacrylonitrile (PAN) fibers, pitch fibers, oxidized PAN, carbon fiber derived from PAN, carbon fiber derived from pitch, rayon, and the like. The carbon fibers may provide structural strength in the finished composite material. The carbon fibers may be a single filament or a carbon fiber tows. Length of fiber and fiber tows can vary from 0.1" to substantially continuous (e.g., continuous). Each carbon filament may be less than or equal to, e.g., about 20 microns in diameter. In some examples, the length of the fibers may be varied along the thickness, T, of the preform. For example, the fibers near an outer surface of preform 50 may each have a length of approximately 0.25 inches (approximately 6.35 mm) while the fibers near the geometric middle of preform 50 may have a length of approximately 3 inches (approximately 7.62 cm) or less.

Any suitable resin matrix material used for forming preform 50 may be used. For example, resin matrix material 55 may be a carbonizable resin or pitch material such that carbon is formed from the resin during a carbonization process. Example resin matrix materials include, but are not limited to, synthetic, coal tar, petroleum isotropic and mesophase pitch, phenolic resin, epoxy resin or other carbon yielding resins.

In some examples, resin matrix material 55 may include pitch. The pitch may be a hydrocarbon-rich material that may be extracted, e.g., from coal, tar, and petroleum. In some examples, the pitch may also be synthetically produced. In different examples, the pitch may come from a single source (e.g., coal) or may be a combination of different pitches from different sources. In some examples, the pitch may be a mesophase pitch. In other examples, the pitch may be an isotropic pitch. Combinations of mesophase and isotropic pitches are also contemplated.

Composite material 52 deposited to form preform may include any suitable amounts of carbon fibers 53 and resin matrix material 55, e.g., that allows for composite material 52 to function as described herein. In some examples, composite material may include approximately 45 to approximately 85 weight percent (wt%) of carbon fibers 53, such as, e.g., approximately 50 to approximately 80 wt%, approximately 80 to approximately 85 wt%, or approximately 45 to approximately 50 wt%. Composite material 52 may include approximately 15 to approximately 55 wt% of resin matrix material 55, such as, e.g., approximately 20 to approximately 50 wt%, approximately 15 to approximately 20 wt%, or approximately 50 to approximately 55 wt% of resin matrix material 55, where the balance of the composite may comprise, consist of, or consist essentially of carbon fibers 53. In some examples, carbon fiber 53 and resin matrix material 55 may be present in a ratio of approximately 50/50 carbon fiber 53 to resin matrix material 55. In some examples, composite material 52 may comprise, consist, or consist essentially of carbon fiber 53 and resin matrix material 55. In some examples, increasing the amount of fibers may provide for a stronger C-C composite material from preform 50, while increasing the amount of resin may provide for a denser C-C composite material from preform 50.

Each individual layer 54 and individual row 56 making up each individual layer 54 of preform 50 may be formed via any suitable additive manufacturing process. In some examples, during the process, individually layers 54 and individual rows 56 are sequentially formed in three-dimensions to generate preform 50 with a desired shape, shown in FIG. 2 as an annular ring with a thickness (T). In some examples, preform may have an inner diameter (ID) of about 4 inches (about 10.16 cm) to about 18 inches (about 45.72 cm), and outer diameter (OD) of about 10 inches (about 25.4 cm) to 30 inches (about 76.2 cm), and a thickness (T) of about 0.5 inches (about 1.27 cm) to about 2.5 inches (about 6.35 cm). Other ranges and geometries are contemplated.

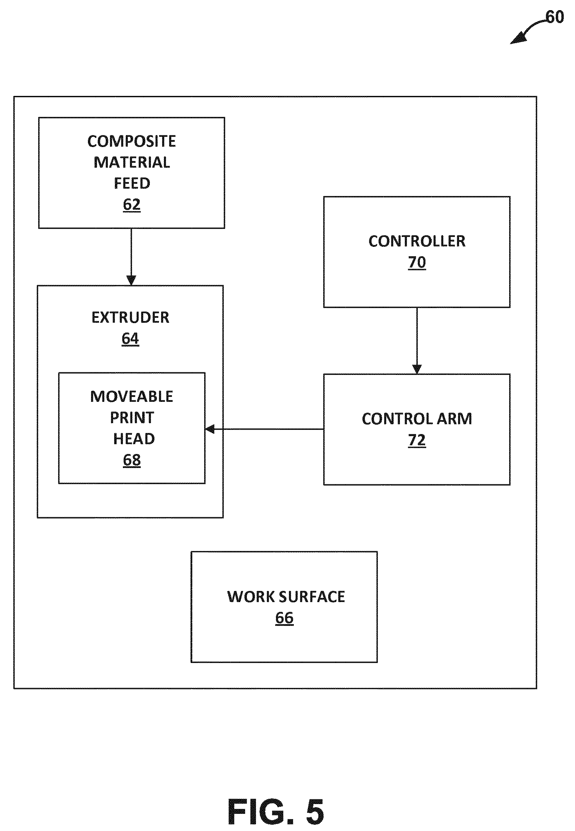

FIG. 5 is a schematic diagram illustrating example three-dimensional printing system 60 which may be used, e.g., to form preform 50 via an additive manufacturing process. Any suitable system configured to deposit composite material 52 to form preform 50 using additive manufacturing techniques may be used. For ease of description, system 60 is described in terms of an extrusion deposition system. However, other systems for forming preform 50 are contemplated.

As shown, system 60 includes composite material feed 62 which is configured to feed composite material 52 including carbon fibers 53 in resin matrix material 55 in bulk form to extruder 64. For example, composite material 52 may be in the form of prefabricated pellets or a coiled ring of prefabricated composite material 52. Composite material 52 may be heated by extruder 64 to a temperature that melts composite material 52 (e.g., to a liquid state or otherwise softens composite material 52) in a manner that allows the heated material to flow out of one or more outlets define by moveable printer head 68. The material flowing out of printer head 68 may be deposited on work surface 66, e.g., either directly or indirectly onto one or more layers of composite material 52 previously deposited. The deposited material may be allowed to cool to form a solid layer of composite material, and the process may be repeated by adjusting the position of print head 68 in three-dimensions above work surface 66, which supports the deposited layers throughout the three-dimensional printing process. Composite material 52 may be deposited via print head 66 on a continuous or discontinuous basis during the printing process. In some examples, the melting and extrusion steps may be carried out in a cross head extrusion system.

In the example illustrated in FIG. 5, system 60 includes controller 70, which may control operation of system 60 during the additive manufacturing process to provide preform 50 with a desired geometry. For example, during deposition, controller 70 may control the movement of control arm 72, which is attached to moveable print head 68, to control the position of moveable print surface 66 relative to work surface 66. In this manner, controller 70 may control the relative position of moveable print head 66 relative composite material 52 exiting out of print head 68 to form individual layers 54 of preform 50, e.g., by depositing individual rows 56 of composite material, such that preform 50 exhibits a desirable three-dimensional geometry. Stepper motors or servo motors may be employed to move print head 68 and adjust the flow of composite material 52 out of print head 68. Controller 70 may be configured to control the position of controller arm 72 in order to move print head 66 in the x-axis and y-axis directions, and, in some examples, in the z-axis direction. Additionally, controller 70 may control one or more other factors of the additive deposition process, such as, e.g., temperature of composite material 52 at one more location within system 60, the timing of the feed of composite material from feed 62 to extruder 64, the position of print head 68 and/or flow rate of resin out of print head 68.

In some examples, controller 70 may include a microprocessor or multiple microprocessors capable of executing and/or outputting command signals in response to received and/or stored data. Controller 70 may include one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. Controller 70 may include computer-readable storage, such as read-only memories (ROM), random-access memories (RAM), and/or flash memories, or any other components for running an application and processing data for controlling operations associated with system 60. Thus, in some examples, controller 70 may include instructions and/or data stored as hardware, software, and/or firmware within the one or more memories, storage devices, and/or microprocessors. In some examples, controller may control print head 66 using a computer-aided manufacturing (CAM) software package running on a microcontroller. Controller 60 may include multiple controllers or only a single controller.

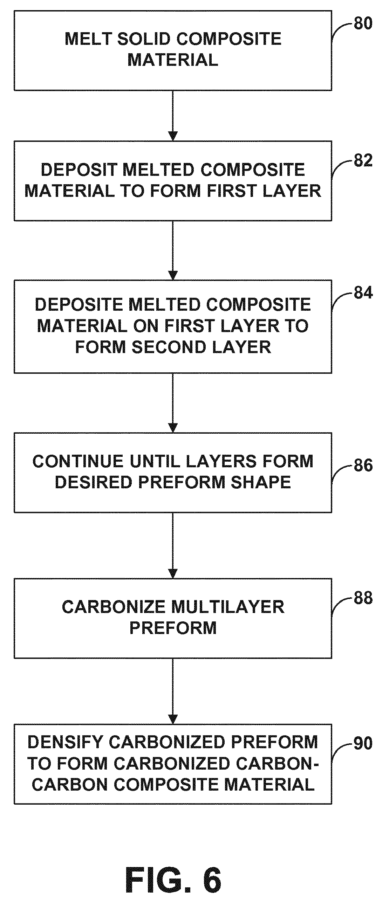

FIG. 6 is a flow diagram illustrating an example technique of forming preform 50 and, subsequently, a densified C-C composite material from preform 50 in accordance with aspects of the disclosure. For ease of illustration, the example of FIG. 6 is described as being performed via system 60 of FIG. 5. However, other systems suitable for carrying out the additive manufacturing of carbon preform 50 are contemplated.

As shown, under the control of controller 70, system 60 may cause bulk composite material 52 including carbon fibers 53 mixed in resin matrix material 55 to be heated by extruder 64 to melt composite material (80), e.g., to a state in which composite material 52 may flow out of print head 68. Initially, print head 68 deposits composite material to form a first layer of composite material, e.g., layer 54X₁, on work surface 66 (82). Such a process may include forming individual rows (e.g., corresponding to rows 56 shown in FIG. 4 for layer 54X₄), to form layer 54X₁ of composite material in the x-y plane. Controller 70 may control the position of print head 68 throughout the process to provide for a desired layer geometry.

After composite material 52 of layer 56X₁ has cooled to solidify the layer, under the control of controller 70, print head 68 deposits composite material 52 to form a second layer of composite material 52 (layer 54X₂) on first layer 54X₁ (84). This process more be repeated to form layers 54X₁, 54X₂, 54X₃, 54X₄, ..., and 54Xₙ of preform 50 (86). Again, controller 70 may control the position of print head 68 in three-dimensions, among others, throughout the deposition process such that the combination of layers 54X₁, 54X₂, 54X₃, 54X₄, ..., and 54Xₙ of composite material 52 form preform 50 with a desired three-dimensional geometry.

Subsequently, multilayer carbon fiber preform 50 may be carbonized by heating temperature of preform 50 to approximately 550 degrees Celsius to approximately 2450 degrees Celsius. During the carbonization process, pyrolysis of the resin and fiber components occurs, and higher molecular weight components are broken down to various gases and carbon. Carbon remains in the carbonized component while the gases are substantially eliminated (e.g., eliminated or nearly eliminated).

Following carbonization of multilayer preform 50 (88), the carbonized preform may be densified with carbonaceous material using chemical vapor deposition (CVD)/chemical vapor infiltration (CVI) (90). For example, the carbonized preform may undergo one or more cycles of CVD/CVI to fill voids in preform 50 resulting from gas evolution during the carbonization processes. The carbonized preform may undergo one or more cycles of CVD/CVI until the material exhibits a desired density. For example, such a material may exhibit a density greater than 1.70 grams per cubic centimeter (g/cc), e.g., between approximately 1.75 g/cc and approximately 1.90 g/cc.

In some examples of CVD/CVI, the carbonized preform is heated in a retort under the cover of inert gas, such as at a pressure below 100 torr. When the carbonized preform reaches a temperature between about 900 degrees Celsius and about 1200 degrees Celsius, the inert gas is replaced with a carbon-bearing gas such as natural gas, methane, ethane, propane, butane, propylene, or acetylene, or a combination of at least two of these gases. When the carbon-bearing gas flows around and through the carbonized preform, a complex set of dehydrogenation, condensation, and polymerization reactions occur, thereby depositing the carbon atoms within the interior and onto the surface of the carbonized preform. Over time, as more and more of the carbon atoms are deposited onto the surfaces of pores in the carbonized preform, the carbonized preform becomes denser. This process may be referred to as densification, because the open spaces in the carbonized preform are eventually filled with a carbon matrix until generally solid carbon parts are formed. U.S. Patent Application Publication No. 2006/0046059 (Arico et al.), the entire disclosure of which is incorporated herein by reference, provides an overview of example CVD/CVI processing that can be used with the techniques described herein. In other examples, other techniques may be used to densify preform 50.

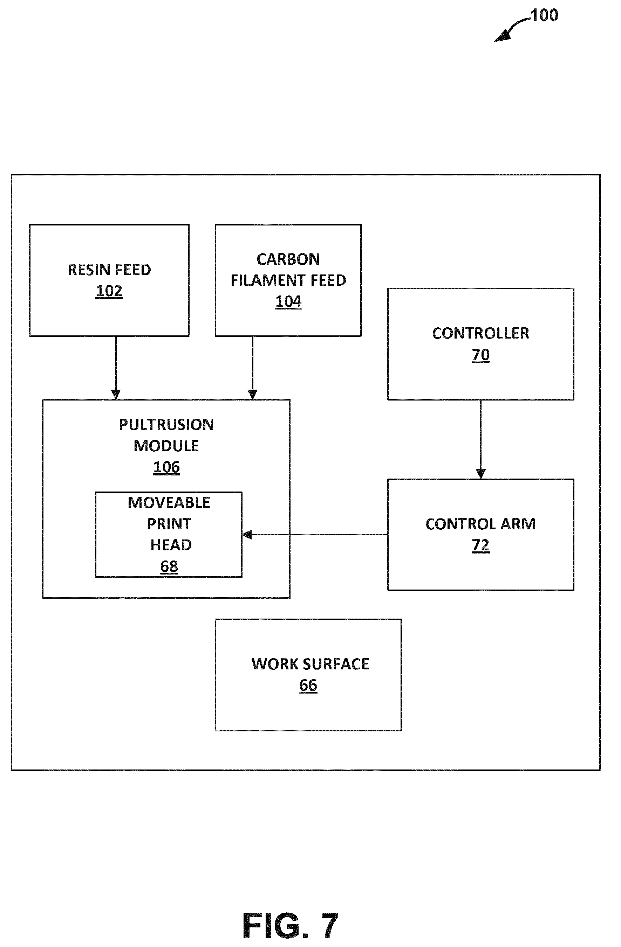

As described above, in some examples, rather depositing a composite material including carbon fibers mixed in a resin material, individual layers of a carbon fiber preform may be formed by depositing, via print head 68 of three-dimensional printing system 60, a plurality of individual carbon fibers each coated with a resin. FIG. 7 is a schematic diagram illustrating another example three-dimensional printing system 100 which may be used, e.g., to form preform 50 by depositing a plurality of individual fibers, where each fiber is coated with resin. Three-dimensional printing system 100 includes work surface 66, moveable print head 68, controller 70, and control arm 72 which function substantially the same or similar to that described with regard to system 60 (FIG. 4).

However, unlike that of system 60 (FIG. 4), system 100 includes resin feed 102, carbon filament feed 104, and pultrusion module 106. In such a configuration, under the control of controller 70, system 100 may be configured to coat a substantially continuous (e.g., continuous) carbon filament from feed 104 with resin from resin feed 102 using pultrusion module 106. Once coated, module 106 may cut the substantially continuous (e.g., continuous) carbon filament into individual carbon fibers coated with resin, which may be deposited via print head 68 directly or indirectly on work surface 66 to form layer of carbon fibers coated with resin. The substantially continuous (e.g., continuous) coated carbon filament may be cut by system 60 before or after exiting print head 68.

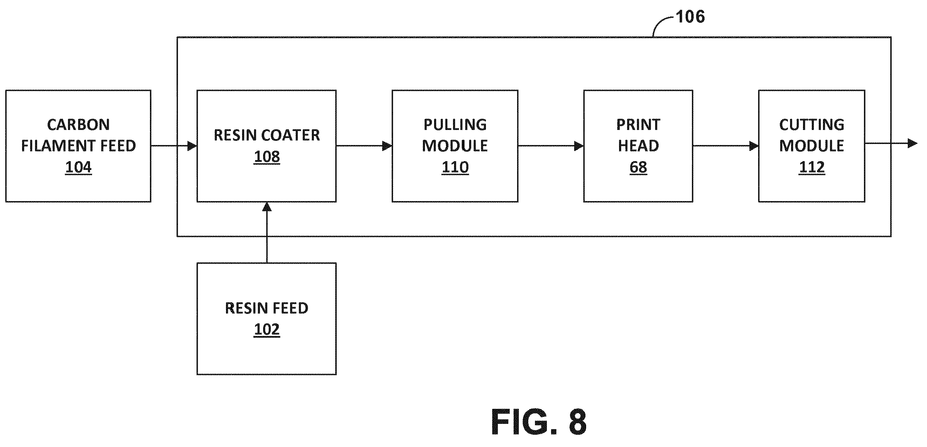

FIG. 8 is a schematic diagram illustrating various aspects of an example pultrusion module 106 as incorporated in system 100 to coat a continuous carbon filament with resin, which is then cut into individual coated carbon fibers. As shown, a substantially continuous (e.g., continuous) carbon filament is fed from carbon filament feed 104 through resin coater 108. The substantially continuous (e.g., continuous) carbon filament from carbon filament feed 104 may be an individual filament or a tow of carbon filaments, e.g., coiled on a roller. Rather than "pushing" the continuous carbon filament through resin coater 108, pulling module 110 "pulls" the carbon filament from the carbon filament fee 104 through resin coater. Pulling module 110 may employ one or more suitable mechanisms for pulling the carbon filament through resin coater 108, such as, e.g., caterpillar puller or reciprocating pullers.

While passing through resin coater 108, the continuous carbon filament is coated with resin supplied from resin feed 102. For example, resin coater 108 may to take the form of a resin bath filled with liquid resin from resin feed 102. Pulling module 110 pulls the continuous carbon filament from feed 104 through the resin in the bath, e.g., to coat the outside of the filament with the resin. After exiting the resin coater 108, the substantially continuous (e.g., continuous) carbon filament may have a coating of resin exhibiting any suitable thickness. The resin on the substantially continuous (e.g., continuous) carbon filament may be cooled, e.g., via air quenching, to solidify or reduce the viscosity of the resin coating.

Subsequently, pulling module 110 feeds coated carbon filament to print head 68. Upon exiting print head 68, cutting module 112 cuts/chops the substantially continuous (e.g., continuous) carbon filament into individual carbon fibers coated with resin, which are then deposited onto work surface 66 via print head 68. Cutting module 112 can include any suitable carbon fiber cutting/chopping technique, such as, e.g., a fiber chopper with a cutting wheel. The fibers may be cut to any suitable length. For example, the substantially continuous (e.g., continuous) coated fiber may be cut into individually coated carbon fibers with a length of approximately 1/16 of an inch (approximately 1.5875 mm) to approximately 3 inches (approximately 7.62 cm), e.g., approximately 1/8 of an inch (approximately 3.175 mm) to approximately 3 inches (approximately 7.62 cm). The thickness of the coating relative the diameter of the carbon fiber may be selected to provide for the compositional ranges of the resin and carbon fibers for the layers described above.

System 100 is only one example of a three-dimensional printing system that may be used to deposit coated carbon fibers to form, e.g., carbon fiber preform 50. In the described example, system 100 is configured to both coat a substantially continuous (e.g., continuous) carbon filament and cut the filament into individual coated carbon fibers. In other example, a three-dimensional printing may be configured to receive pre-coated, substantially continuous (e.g., continuous) carbon filaments, which are then cut and subsequently deposited via print head 68. In other examples, the carbon fibers are both pre-coated and pre-cut before being fed into three-dimensional printing system 100 for deposition via print head 68.

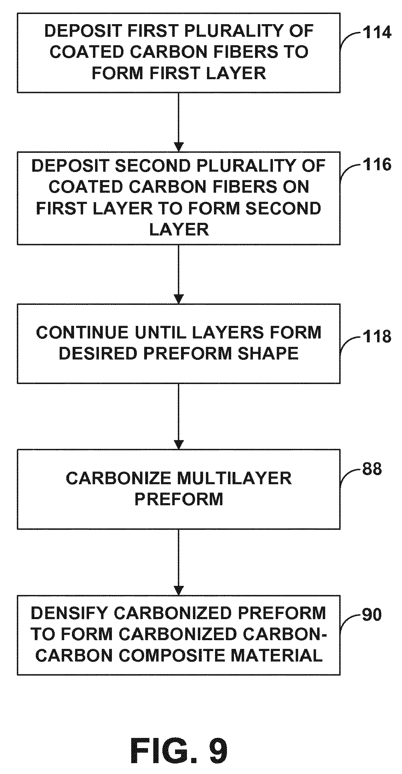

FIG. 9 is a flow diagram illustrating another example technique of forming preform 50 and, subsequently, a densified C-C composite material from preform 50 in accordance with aspects of the disclosure. The example of FIG. 9 is described as being performed via system 100 of FIG. 7. However, other systems suitable for carrying out the additive manufacturing of carbon preform 50 are contemplated.

As shown, under the control of controller 70, print head 68 deposits a first plurality of individual fibers each coated with a resin to form a first layer of resin coated carbon fibers, e.g., layer 54X₁, on work surface 66 (114). Such a process may include forming individual rows (e.g., corresponding to rows 56 shown in FIG. 4 for layer 54X₄), to form layer 54X₁ of the resin coated carbon fibers in the x-y plane. Controller 70 may control the position of print head 68 throughout the process to provide for a desired layer geometry. In some examples, control of the orientation of the individual fibers in each respective layer may be greater when depositing individual coated fibers, as in FIG. 9, compared, e.g., to depositing a composite material with carbon fibers mixed in a resin matrix material, as in FIG. 6. For example, the technique of FIG. 9 may provide for relatively high control over the z-axis direction orientation within the individual layers, e.g., wherein some or substantially all of the fibers in an individual layers may be deposited such that the fibers extends out of the x-y plane and into the z-axis direction substantially along (e.g., along or nearly along) the longitudinal axis of the carbon fiber.

Subsequently, print head 68 deposits a second plurality of individual fibers each coated with a resin to form a second layer of coated carbon (layer 54X₂), on first layer 54X₁ (116). This process more be repeated to form layers 54X₁, 54X₂, 54X₃, 54X₄, ..., and 54Xₙ of preform 50 (118). Again, controller 70 may control the position of print head in three-dimensions, among others, throughout the deposition process such that the combination of layers 54X₁, 54X₂, 54X₃, 54X₄, ..., and 54Xₙ of composite material 52 form preform 50 with a desired three-dimensional geometry. The multilayer carbon fiber preform 50 may then be carbonized (88) and densified (90) as describe above with regard to the example technique of FIG. 6.

Examples of different techniques for forming carbon fiber preforms have been described. In different examples, techniques of the disclosure may be implemented in different hardware, software, firmware or any combination thereof. In some examples, techniques of the disclosure may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. In some examples, techniques of the disclosure may also be embodied or encoded in a computer-readable medium, such as a computer-readable storage medium, containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer readable media.

Various examples have been described. These and other examples are within the scope of the following claims.

## Claims

1. A method for forming a carbon fiber preform, the method comprising:
depositing, via a print head of a three-dimensional printing system, a first plurality of coated carbon fibers on a substrate to form a first layer on the substrate, wherein each carbon fiber of the first plurality of coated carbon fibers comprises a carbon fiber coated with a resin; and
depositing, via the print head of the three-dimensional printing system, a second plurality of coated carbon fibers on the first layer to form a second layer on the first layer, wherein each carbon fiber of the second plurality of coated carbon fibers comprises the carbon fiber coated with the resin, and wherein the carbon fiber preform includes the first layer of coated carbon fibers and the second layer of coated carbon fibers.

2. The method of claim 1, wherein depositing, via the print head of the three-dimensional printing system, the first plurality of coated carbon fibers on the substrate to form the first layer on the substrate comprises cutting a substantially continuous carbon fiber filament coated with the resin to form the first plurality of coated carbon fibers.

3. The method of claim 2, further comprising coating the substantially continuous carbon fiber filament via the three-dimensional printing system prior to cutting the substantially continuous filament of carbon fiber.

4. The method of claim 2, wherein cutting the substantially continuous carbon fiber filament coated with the resin comprises cutting a tow of substantially continuous carbon fiber filaments coated with the resin.

5. The method of claim 1, wherein the first layer and the second layer each includes approximately 45 weight percent to approximately 85 weight percent of the plurality of carbon fibers, and approximately 15 weight percent and approximately 55 weight percent of the resin.

6. The method of claim 1, wherein the resin comprises at least one of synthetic pitch, coal tar, petroleum isotropic pitch, mesophase pitch, phenolic resin, or epoxy resin.

7. The method of claim 1, further comprising:
carbonizing the carbon fiber preform; and
densifying the carbonized carbon fiber preform to form a densified carbon-carbon composite material.

8. The method of claim 7, wherein the densified carbon-carbon composite material exhibits a density greater than or equal to approximately 1.7 grams per cubic centimeter.

9. The method of claim 1, wherein the first layer and the second layer each have a thickness between approximately 25 mils (approximately 0.635 millimeters (mm)) and approximately 125 mils (approximately 3.175 mm).

10. A carbon fiber preform comprising a plurality of stacked layers, the plurality of stacked layers including a first layer formed by depositing, via a print head of a three-dimensional printing system, a first plurality of coated carbon fibers, and a second layer formed by depositing, via the print head of the three-dimensional printing system, a second plurality of coated carbon fibers on the first layer to form the second layer on the first layer, wherein each carbon fiber of the first plurality and the second plurality of coated carbon fibers comprises a carbon fiber coated with a resin.
